# EUROPÄISCHE PATENTSCHRIFT

(11) **EP 4 368 076 B1**
(45) Veröffentlichungstag und Bekanntmachung des Hinweises auf die Patenterteilung: **05.08.2026**
(21) Anmeldenummer: 23203039.5
(22) Anmeldetag: 11.10.2023
(51) Int. Cl.: A47J 27/00, A47J 36/02

(54) **KOCHGESCHIRR, KOCHSYSTEM UND VERFAHREN ZUM BETREIBEN**
COOKING VESSEL, COOKING SYSTEM AND METHOD FOR OPERATING
USTENSILE DE CUISSON, SYSTÈME DE CUISSON ET PROCÉDÉ DE FONCTIONNEMENT

(30) Priorität: 09.11.2022 BE 202205908
(43) Veröffentlichungstag der Anmeldung: 15.05.2024
(73) Patentinhaber: Miele & Cie. KG, 33332 Gütersloh (DE)
(72) Erfinder: Ennen, Volker, 32257 Bünde (DE); Böhm, Christian, 49377 Vechta (DE)

(56) Entgegenhaltungen:
- EP-A1- 3 634 085
- EP-A1- 3 821 769
- EP-A1- 3 892 167
- EP-A1- 4 070 694
- EP-A1- 4 070 695
- EP-B1- 2 731 475
- KR-A- 20220 060 489
- US-A1- 2022 053 979

## Beschreibung

Die vorliegende Erfindung betrifft ein Kochgeschirr umfassend wenigstens einen Boden und wenigstens eine Wandung, wobei durch den Boden und die Wandung wenigstens ein Aufnahmevolumen begrenzt wird und wobei der Wandung wenigstens eine Energieaufnahmeeinrichtung mit wenigstens einem Spulenelement zugeordnet ist. Des Weiteren betrifft die vorliegende Erfindung ein Kochsystem und ein Verfahren zum Betreiben eines solchen Kochsystems.

Beim modernen Kochen soll ein Benutzer einen Garprozess möglichst komfortabel steuern können und vorzugsweise auch durch Assistenzfunktionen bzw. Automatikprogramme unterstützt werden.

Modernes Kochgeschirr kann dazu je nach Ausgestaltung Baugruppen wie z. B. Sensor-, Signal- und/oder Bedieneinheiten bzw. Bedienkomponenten umfassen, welche einen Benutzer bei der Zubereitung von Nahrungsmitteln und/oder Speisen unterstützen. So gibt es beispielsweise modernes Kochgeschirr, bei dem sensorische Komponenten z. B. eine Temperatur in einem Topf und/oder in einer Pfanne ermitteln und so einen Kochvorgang überwachen und/oder einem Benutzer beim Erreichen eines gewünschten Garergebnisses behilflich sind. Auch kann modernes Kochgeschirr verschiedenste Signaleinheiten z. B. zur Anzeige von Information und/oder Einstellungsmöglichkeiten und/oder verschiedenste Bedieneinheiten aufweisen, welche einem Benutzer bei einem Kochvorgang helfen und/oder dieses sogar erst ermöglichen.

Um solche Baugruppen mit Energie zu versorgen, weist modernes Kochgeschirr häufig sogenannte Energy-Harvesting-Spulen auf, welche Energie aus einem z. B. von einer Induktionsspule bereitgestellten elektromagnetischen Feld aufnehmen und wenigstens einer Baugruppe zur Verfügung stellen können. Dabei sind die Energy-Harvesting-Spulen regelmäßig in die Böden und/oder die Wandungen des Kochgeschirrs integriert, unterhalb der Böden aufgenommen und/oder auch im Wesentlichen seitlich an einer Wandung des Kochgeschirrs angeordnet. Ein solches Kochgeschirr wird in KR20220060489 offenbart.

Nachteilig an solchen bekannten Ausführungen von modernem Kochgeschirr ist jedoch, dass Energy-Harvesting-Spule oft nur unter erheblichen konstruktiven Aufwand zweckdienlich an einem Boden und/oder einer Wandung angeordnet und/oder in diese integriert werden können. Energy-Harvesting-Spulen, welche im Wesentlichen seitlich an einer Wandung des Kochgeschirrs angeordnet sind, weisen häufig kein optisch ansprechendes Design auf und/oder ermöglichen oft, insbesondere aufgrund ihrer räumlichen Entfernung zu einer üblicherweise unterhalb einer Aufstelleinrichtung angeordneten Induktionsspule nur eine geringe, wenig effiziente oder sogar keine ausreichende Energieaufnahme.

Es ist daher die Aufgabe der vorliegenden Erfindung, ein Kochgeschirr bereitzustellen, welches vorzugsweise unter geringem konstruktivem Aufwand eine effiziente Energieaufnahme zum Betreiben von insbesondere Verbrauchseinrichtungen ermöglicht und bevorzugt ein optisch ansprechendes Design aufweist.

Diese Aufgabe wird gelöst durch das Verfahren zum Betreiben eines Kochgeschirrs mit den Merkmalen des Anspruches 1, durch das Kochsystem mit den Merkmalen des Anspruchs 14, und durch das Verfahren mit den Merkmalen des Anspruchs 15. Bevorzugte Weiterbildungen der Erfindung sind Gegenstand der Unteransprüche. Weitere Vorteile und Merkmale der Erfindung ergeben sich aus den Ausführungsbeispielen.

Das erfindungsgemäße Kochgeschirr umfasst wenigstens einen Boden und wenigstens eine Wandung, wobei durch den Boden und die Wandung wenigstens ein Aufnahmevolumen begrenzt wird. Dabei ist der Wandung wenigstens eine Energieaufnahmeeinrichtung mit wenigstens einem Spulenelement zugeordnet. Dabei umfasst die Energieaufnahmeeinrichtung wenigstens eine Kopplungseinrichtung, welche das Spulenelement so mit wenigstens einem elektromagnetischen Feld koppelt, dass das Spulenelement eine vom elektromagnetischen Feld bereitgestellte Energie wenigstens teilweise aufnehmen kann.

Dabei stellt die Kopplungseinrichtung vorzugsweise wenigstens eine Übertragungseinrichtung zum wenigstens teilweisen Übertragen wenigstens einer von einem elektromagnetischen Feld bereitgestellten Energie auf das Spulenelement bereit. Bevorzugt stellt die Kopplungseinrichtung wenigstens eine Feldleiteinrichtung zum wenigstens teilweisen Leiten eines magnetischen Feldes, insbesondere eines elektromagnetischen Wechselfeldes, zu dem Spulenelement bereit.

Vorzugsweise wird das elektromagnetische Feld von wenigstens einer Induktionsspule, insbesondere einer Induktionsspule eines Induktionskochfeldes bereitgestellt.

In vorteilhaften Weiterbildungen ist das Kochgeschirr, insbesondere der Boden wenigstens abschnittsweise dazu geeignet und ausgebildet, mittels wenigstens einer Induktionsspule, insbesondere eines Induktionskochfeldes beheizt zu werden.

In zweckmäßigen Weiterbildungen weist das Spulenelement wenigstens eine Wicklung, insbesondere eines metallischen Drahtes auf. Vorzugsweise ist das Spulenelement wenigstens abschnittsweise im Wesentlichen kreisförmig und/oder helixförmig ausgebildet. Bevorzugt weist das Spulenelement wenigstens abschnittsweise zwei im Wesentlichen nebeneinander angeordnete Wicklungen auf, sodass das Spulenelement wenigstens abschnittsweise im Wesentlichen 8-förmig ausgebildet ist. Je nach Aufgabe und Ausgestaltung kann das Spulenelement, insbesondere wenigstens eine Wicklung des Spulenelementes auch eine andere Form aufweisen.

Vorzugsweise weist das Spulenelement wenigstens eine Spulenachse auf. Insbesondere ist die Wicklung des Spulenelements im Wesentlichen entlang der Spulenachse ausgebildet. Bevorzugt ist wenigstens eine Wicklung des Spulenelements in wenigstens einer Spulenebene angeordnet. In zweckmäßigen Weiterbildungen ist die Spulenachse im Wesentlichen senkrecht zur Spulenebene ausgerichtet.

Vorzugsweise ist das Spulenelement wenigstens abschnittsweise im Wesentlichen senkrecht und/oder waagerecht zum Boden des Kochgeschirrs angeordnet und/oder ausgerichtet. Je nach Aufgabe und Ausgestaltung kann das Spulenelement auch eine andere Orientierung aufweisen.

In zweckmäßigen Weiterbildungen ist wenigstens eine Spulenebene im Wesentlichen parallel und/oder senkrecht zu der Wandung des Kochgeschirrs orientiert und/oder ausgerichtet. In vorteilhaften Weiterbildungen ist die Spulenachse im Wesentlichen parallel und/oder senkrecht zu einer Flächennormalen der Wandung des Kochgeschirrs orientiert und/oder ausgerichtet. Bevorzugt weist die Spulenebene einen Winkel im Bereich von 90° bis 45°, insbesondere von 90° bis 60° zu einer Flächennormalen der Wandung des Kochgeschirrs auf. Besonders bevorzugt weist die Spulenachse einen Winkel im Bereich von 90° bis 45°, insbesondere von 90° bis 60° zu einer Flächennormalen des Bodens des Kochgeschirrs auf. Vorzugsweise weist die Spulenebene einen Winkel im Bereich von 0° bis 45°, insbesondere von 0° bis 30° zu einer Flächennormalen des Bodens des Kochgeschirrs auf. Besonders bevorzugt weist die Spulenachse einen Winkel im Bereich von 0° bis 45°, insbesondere von 0° bis 30° zu einer Flächennormalen des Bodens des Kochgeschirrs auf.

Vorzugsweise ist die Kopplungseinrichtung wenigstens abschnittsweise beabstandet von der Wandung am Kochgeschirr angeordnet.

In vorteilhaften Weiterbildungen umfasst das Kochgeschirr und/oder die Energieaufnahmeeinrichtung wenigstens eine Steuereinrichtung, insbesondere zur Steuerung wenigstens einer Verbrauchseinrichtung und/oder wenigstens einer Speichereinrichtung.

Vorzugsweise umfasst das Kochgeschirr wenigstens ein Griffelement, insbesondere zum Greifen und/oder zum Handhaben des Kochgeschirrs durch einen Benutzer. In zweckmäßigen Weiterbildungen wird das Griffelement von wenigstens einem Griff und/oder Henkel und/oder einem ähnlich geeigneten Element bereitgestellt.

Das erfindungsgemäße Kochgeschirr hat viele Vorteile. Ein erheblicher Vorteil ist, dass die Energieaufnahmeeinrichtung wenigstens eine Kopplungseinrichtung umfasst, welche das Spulenelement so mit wenigstens einem elektromagnetischen Feld koppelt, dass das Spulenelement eine vom elektromagnetischen Feld bereitgestellte Energie wenigstens teilweise aufnehmen kann.

Dadurch, dass die Energieaufnahmeeinrichtung wenigstens eine Kopplungseinrichtung umfasst, kann ein z. B. von einer Induktionsspule bereitgestelltes elektromagnetisches Feld wenigstens teilweise über die Höhe des Kochgeschirrs hochgeführt werden bzw. das elektromagnetische Feld, insbesondere in einem oberen Abschnitt des Kochgeschirrs verstärkt und die Feldstärke erhöht werden. Somit wird eine für eine effektive Energieaufnahme mittels des Spulenelementes notwendige Feldstärke, insbesondere in einem oberen Abschnitt des Kochgeschirrs zur Verfügung gestellt.

Hierdurch wird es möglich, mittels eines der Wandung des Kochgeschirrs zugeordneten Spulenelementes eine von einem elektromagnetischen Feld bereitgestellte Energie effizient und insbesondere zuverlässig aufzunehmen. So kann beispielsweise dadurch, dass die Kopplungseinrichtung ein elektromagnetisches Feld, insbesondere in einem oberen Abschnitt des Kochgeschirrs verstärkt und dadurch, dass die Kopplungseinrichtung das Spulenelement mit einem elektromagnetischen Feld koppelt, das Spulenelement an und/oder seitlich der Wandung des Kochgeschirrs angeordneten sein. Somit sind keine großen Energy-Havesting-Spulen unter und/oder im Boden des Kochgeschirrs notwendig. Auch kann das Spulenelement in und/oder an einem oberen üblicherweise kälteren Wandungsabschnitt angeordnet werden, sodass das Spulenelement, insbesondere auch in einer gewissen räumlichen Entfernung zu z. B. einer Induktionsspule besonders effektiv Energie aufnehmen kann.

Insbesondere ermöglicht diese Anordnungen des Spulenelementes auch einen besonders einfachen Aufbau eines Kochgeschirrs mit einem Spulenelement zur Realisierung einer Energieaufnahme bzw. es wird ein solches Kochgeschirr mit einem besonders geringen konstruktiven Aufwand bereitgestellt. Hierdurch weist das erfindungsgemäße Kochgeschirr eine robustere Konstruktion auf und ist insbesondere unter geringem Montage- und/oder Kostenaufwand zu fertigen.

Des Weiteren kann aufgrund der Verstärkung des elektromagnetischen Feldes durch die Kopplungseinrichtung das Spulenelement kleiner ausgestaltet sein bzw. kleinere Abmessungen aufweisen und es kann so ein optisch besonders ansprechendes Design ermöglicht werden.

Insbesondere aus den zuvor aufgeführten Gründen ermöglicht das erfindungsgemäße Kochgeschirr unter geringem konstruktivem Aufwand eine effiziente Energieaufnahme zum Betreiben wenigstens einer Verbrauchseinrichtung und weist je nach Ausgestaltung ein optisch ansprechendes Design auf.

Bevorzugt stellt die Kopplungseinrichtung wenigstens eine Feldleiteinrichtung bereit, welche wenigstens abschnittsweise von einem ferromagnetischen und/oder ferrimagnetischen Material bereitgestellt wird. Vorzugsweise wird die Kopplungseinrichtung wenigstens abschnittsweise von einem ferromagnetischen und/oder ferromagnetischen Material bereitgestellt. Hierdurch kann ein elektromagnetisches Feld besonders effektiv und/oder zuverlässig zu dem Spulenelement geleitet werden bzw. das elektromagnetische Feld im Bereich des Spulenelementes besonders effektiv und/oder zuverlässig verstärkt werden.

Dabei leitet eine Feldeinrichtung vorzugsweise wenigstens ein magnetisches Feld, insbesondere ein elektromagnetisches Wechselfeld, wenigstens teilweise zum Spulenelement. Vorzugsweise leitet die Feldeinrichtung ein magnetisches Feld, insbesondere ein elektromagnetisches Wechselfeld so zu dem Spulenelement, dass das Spulenelement eine vom magnetischen Feld, insbesondere vom elektromagnetischen Feld bereitgestellte Energie wenigstens teilweise aufnehmen kann.

Vorzugsweise überträgt die Feldleiteinrichtung wenigstens ein magnetisches Feld, insbesondere ein elektromagnetisches Wechselfeld wenigstens teilweise zum Spulenelement.

Besonders bevorzugt stellt die Kopplungseinrichtung wenigstens eine Feldleiteinrichtung bereit, welche eine relative magnetische Leitfähigkeit von wenigstens 2 aufweist. Hierdurch kann das elektromagnetische Feld besonders effektiv und/oder zuverlässig im Bereich des Spulenelementes verstärkt werden.

Dabei ist unter der relativen magnetischen Leitfähigkeit insbesondere eine magnetische Permeabilitätszahl zu verstehen.

Vorzugsweise ist die relative magnetische Leitfähigkeit der Feldleiteinrichtung wenigstens 4, vorzugsweise wenigstens 20, bevorzugt wenigstens 200, besonders bevorzugt wenigstens 800 oder noch mehr. In zweckmäßigen Weiterbildungen ist die relative magnetischen Leitfähigkeit der Feldeinrichtung im Bereich von 1 bis 50000, bevorzugt im Bereich von 4 bis 15000, besonders bevorzugt von 8 bis 8000, insbesondere im Bereich von 20 bis 1000 oder bevorzugt im Bereich von 100 bis 800. Je nach Aufgabe und Ausgestaltung kann die Feldleiteinrichtung auch eine kleinere oder größere relative magnetische Leitfähigkeit aufweisen.

In vorteilhaften Weiterbildungen wird die Kopplungseinrichtung wenigstens abschnittsweise von einem Ferrit bereitgestellt. Hierdurch wird eine insbesondere kostengünstige Kopplungseinrichtung bereitgestellt, welche das elektromagnetische Feld besonders effektiv und/oder zuverlässig im Bereich des Spulenelementes verstärken kann.

Dabei ist ein Ferrit insbesondere ein Werkstoff aus Fe2O3 und/oder Fe3O4. Vorzugsweise umfasst ein Ferrit Fe2O3 und/oder Fe3O4. Je nach Aufgabe und Ausführung kann ein Ferrit zusätzlich auch andere Komponenten wie z. B. Metalloxide und/oder Metallkarbonate als Zusatzstoffe aufweisen.

Vorzugsweise wird die Kopplungseinrichtung wenigstens abschnittsweise von einem Metall und/oder eine Keramik bereitgestellt.

Besonders bevorzugt umfasst die Wandung einen unteren Wandungsabschnitt und einen oberen Wandungsabschnitt, wobei das Spulenelement wenigstens abschnittsweise in dem oberen Wandungsabschnitt angeordnet ist. Hierdurch kann das Spulenelement in einem üblicherweise kälteren Wandungsabschnitt angeordnet werden, sodass das Spulenelement besonders effektiv Energie aufnehmen kann.

Vorzugsweise ist das Spulenelement vollständig in dem oberen Wandungsabschnitt angeordnet. In zweckmäßigen Weiterbildungen ist die Kopplungseinrichtung wenigstens abschnittsweise in dem unteren Wandungsabschnitt angeordnet.

Bevorzugt ist während des Beheizens des Kochgeschirrs mittels einer Induktionsspule der obere Wandungsabschnitt im Vergleich zum unteren Wandungsabschnitt wesentlich kälter. Vorzugsweise ist während des Beheizens des Kochgeschirrs mittels einer Induktionsspule der untere Wandungsabschnitt kälter als der Boden des Kochgeschirrs.

In vorteilhaften Weiterbildungen ist die Kopplungseinrichtung wenigstens teilweise an der Außenseite der Wandung aufgenommen. Hierdurch kann die Kopplungseinrichtung ein elektromagnetisches Feld besonders zuverlässig zum Spulenelement leiten.

Vorzugsweise ist die Kopplungseinrichtung wenigstens abschnittsweise an wenigstens einer dem Aufnahmevolumen abgewandten Seite bzw. Seitenfläche der Wandung angeordnet und/oder aufgenommen. Bevorzugt ist die Kopplungseinrichtung wenigstens abschnittsweise so an einer Seite bzw. Seitenfläche der Wandung angeordnet, dass die Kopplungseinrichtung außerhalb der Grundfläche bzw. Querschnittsfläche des Bodens angeordnet ist.

In zweckmäßigen Weiterbildungen ist die Energieaufnahmeeinrichtung wenigstens teilweise an der Außenseite der Wandung aufgenommen.

Besonders bevorzugt ist die Kopplungseinrichtung wenigstens abschnittsweise von wenigstens einer Abdeckeinrichtung verdeckt und/oder abgedeckt.

Insbesondere ist die Kopplungseinrichtung nicht sichtbar von einer Abdeckeinrichtung abgedeckt.

Dabei wird eine Abdeckeinrichtung insbesondere von einem Gehäuse und/oder einer ähnlichen Einrichtung bereitgestellt.

In zweckmäßigen Weiterbildungen ist die Energieaufnahmeeinrichtung wenigstens teilweise reversibel an der Wandung angeordnet. Hierdurch ist das Kochgeschirr besonders flexibel einsetzbar, insbesondere verstaubar. Auch wird hierdurch ein optisch besonders ansprechendes Design ermöglicht.

Insbesondere ist wenigstens die Kopplungseinrichtung reversibel an der Wandung angeordnet.

Insbesondere ist wenigstens die Kopplungseinrichtung und/oder das Spulenelement als ein Anbauteil ausgebildet, welches wenigstens zeitweise und/oder wenigstens teilweise abnehmbar ist. Je nach Aufgabe und Ausgestaltung kann auch die Energieaufnahmeeinrichtung als ein Anbauteil ausgebildet sein, welches wenigstens zeitweise und/oder wenigstens teilweise abnehmbar ist.

Vorzugsweise ist wenigstens die Kopplungseinrichtung und/oder das Spulenelement mittels wenigstens einer Haltevorrichtung so an der Wandung aufgenommen, dass die Kopplungseinrichtung reversibel an der Wandung angeordnet werden kann. In zweckmäßigen Weiterbildungen ist die Kopplungseinrichtung und/oder das Spulenelement reversibel vom Kochgeschirr abnehmbar. Bevorzugt ist die Haltevorrichtung dazu geeignet und ausgebildet, die Kopplungseinrichtung mittels wenigstens einer Klemmkraft und/oder magnetischen Kraft an der Wandung des Kochgeschirrs reversibel zu halten. Je nach Aufgabe und Ausgestaltung kann die Haltevorrichtung auch als eine Schraub-, Einrast-, Niet und/oder Klebeverbindung ausgeführt sein.

Gemäß einem Aspekt ist die Energieaufnahmeeinrichtung vom Kochgeschirr abnehmbar gestaltet, wobei insbesondere die Temperatursensoren und/oder eine Auswerteeinheit an dem Kochgeschirr verbleiben können. Diese würden dann robust ausgeführt, insbesondere gekapselt und/oder spannungsfrei sein, und so auch eine Reinigung im Geschirrspüler überstehen.

Die Energieaufnahmeeinrichtung weist bevorzugt neben der Energy-Harvesting-Einheit aus Spule und Ferrit auch einen Energiespeicher mit Ladeelektronik, wie z.B. einen Kondensator und/oder eine Batterie, auf.

Besonders bevorzugt ist das Spulenelement wenigstens abschnittsweise um die Kopplungseinrichtung gewickelt. Hierdurch ist das Spulenelement besonders zuverlässig mit der Kopplungseinrichtung gekoppelt und kann besonders effizient Energie aufnehmen.

Insbesondere ist das Spulenelement wenigstens abschnittsweise spiralförmig um die Kopplungseinrichtung gewickelt. Vorzugsweise ist das Spulenelement um die gesamte Kopplungseinrichtung gewickelt.

In vorteilhaften Weiterbildungen ist die Spulenachse entlang der Kopplungseinrichtung ausgerichtet. Vorzugsweise wird die Spulenachse wenigstens abschnittsweise von der Kopplungseinrichtung bereitgestellt.

In zweckmäßigen Weiterbildungen ist das Spulenelement wenigstens abschnittsweise über der Kopplungseinrichtung, insbesondere an der Wandung angeordnet. Auch hierdurch ist das Spulenelement besonders zuverlässig mit der Kopplungseinrichtung gekoppelt und kann besonders effizient Energie aufnehmen.

Vorzugsweise ist das Spulenelement wenigstens abschnittsweise unterhalb der Kopplungseinrichtung, insbesondere an der Wandung angeordnet.

Insbesondere ist das Spulenelement vollständig über und/oder unter der Kopplungseinrichtung angeordnet. Vorzugsweise ist das Spulenelement wenigstens abschnittsweise oberhalb und/oder unterhalb der Kopplungseinrichtung angeordnet.

In vorteilhaften Weiterbildungen ist die Spulenachse eines wenigstens abschnittsweise über und/oder unterhalb der Kopplungseinrichtung angeordneten Spulenelements im Wesentlichen parallel zu der Flächennormalen des Bodens ausgerichtet. Je nach Aufgabe und Ausgestaltung kann die Spulenachse eines wenigstens abschnittsweise über und/oder unterhalb der Kopplungseinrichtung angeordneten Spulenelementes auch eine andere Orientierung aufweisen. Vorzugsweise ist wenigstens eine Spulenebene eines wenigstens abschnittsweise über der Kopplungseinrichtung angeordneten Spulenelementes im Wesentlichen parallel zum Boden des Kochgeschirrs angeordnet.

Bevorzugt ist das Spulenelement wenigstens abschnittsweise seitlich der Kopplungseinrichtung angeordnet. Auch hierdurch ist das Spulenelement besonders zuverlässig mit der Kopplungseinrichtung gekoppelt und kann besonders effizient Energie aufnehmen.

Dabei ist unter seitlich insbesondere neben und/oder auf der Kopplungseinrichtung zu verstehen.

Vorzugsweise ist das Spulenelement seitlich der Kopplungseinrichtung derart angeordnet, dass die Kopplungseinrichtung zwischen der Wandung und dem Spulenelement angeordnet ist.

Besonders bevorzugt ist die Spulenachse eines wenigstens abschnittsweise seitlich der Kopplungseinrichtung angeordneten Spulenelementes im Wesentlichen senkrecht zu der Flächennormalen des Bodens ausgerichtet. Je nach Aufgabe und Ausgestaltung kann die Spulenachse eines wenigstens abschnittsweise seitlich der Kopplungseinrichtung angeordneten Spulenelementes auch eine andere Orientierung aufweisen. Vorzugsweise ist wenigstens eine Spulenebene eines wenigstens abschnittsweise seitlich der Kopplungseinrichtung angeordneten Spulenelementes im Wesentlichen parallel zu der Kopplungseinrichtung, insbesondere wenigstens einer Fläche der Kopplungseinrichtung orientiert.

In vorteilhaften Weiterbildungen umfasst die Kopplungseinrichtung wenigstens einen im Wesentlichen horizontal ausgerichteten Abschnitt und/oder wenigstens einen im Wesentlichen vertikal ausgerichteten Abschnitt.

Vorzugsweise ist die Kopplungseinrichtung im Wesentlichen L-förmig ausgestaltet. In zweckmäßigen Weiterbildungen ist wenigstens ein Abschnitt, insbesondere ein im Wesentlichen vertikal ausgerichteter Abschnitt der Kopplungseinrichtung, an und/oder entlang der Wandung angeordnet. Vorzugsweise ist wenigstens ein Abschnitt, insbesondere ein im Wesentlichen horizontal ausgerichteter Abschnitt der Kopplungseinrichtung an und/oder entlang wenigstens eines Griffelementes angeordnet.

Bevorzugt umfasst die Energieaufnahmeeinrichtung wenigstens eine Verbrauchseinrichtung und/oder wenigstens eine Speichereinrichtung.

Vorzugsweise verbraucht die Verbrauchseinrichtung wenigstens teilweise die von der Energieaufnahmeeinrichtung aufgenommene Energie. Insbesondere umfasst die wenigstens eine Verbrauchseinrichtung wenigstens eine elektronische Baugruppe und/oder wird wenigstens teilweise von einer elektronischen Baugruppe bereitgestellt. In zweckmäßigen Weiterbildungen stellt die Verbrauchseinrichtung wenigstens eine Signaleinrichtung, insbesondere wenigstens Anzeigeeinrichtung zur Anzeige wenigstens eine Information und/oder wenigstens einer Einstellmöglichkeit bereit.

In zweckmäßigen Weiterbildungen speichert die Speichereinrichtung wenigstens teilweise die von der Energieaufnahmeeinrichtung aufgenommene Energie. Vorzugsweise wird die Speichereinrichtung von insbesondere einer reversibel ladbaren Batterie und/oder einer ähnlichen Einrichtung bereitgestellt.

In vorteilhaften Weiterbildungen ist die Verbrauchseinrichtung und/oder die Speichereinrichtung wenigstens abschnittsweise in einem Griffelement angeordnet. Hierdurch wird ein Kochgeschirr mit einem optisch besonders ansprechenden Design ermöglicht.

Bevorzugt ist die Verbrauchseinrichtung und/oder die Speichereinrichtung wenigstens abschnittsweise an einem Griffelement angeordnet.

Dabei wird das Griffelement insbesondere von einem Henkel und/oder einer Ähnlichem bereitgestellt.

Besonders bevorzugt stellt die Kopplungseinrichtung wenigstens eine Abschirmeinrichtung bereit, welche wenigstens eine elektronische Baugruppe und/oder wenigstens ein Sensorelement, insbesondere einen Temperatursensor wenigstens abschnittsweise im Wesentlichen vor wenigstens einem elektromagnetischen Feld abschirmt.

Dabei wird die elektronische Baugruppe insbesondere von der Verbrauchseinrichtung und/oder der Speichereinrichtung bereitgestellt.

Vorzugsweise schirmt die Kopplungseinrichtung wenigstens abschnittsweise wenigstens eine elektronische Baugruppe im Wesentlichen vor wenigstens dem elektromagnetischen Feld ab, welches die Energie zur Energieaufnahme mittels der Energieaufnahmeeinrichtung und/oder des Spulenelementes im Wesentlichen bereitstellt. Insbesondere schirmt die Kopplungseinrichtung wenigstens eine Sensoreinrichtung im Wesentlichen so vor wenigstens dem elektromagnetischen Feld ab, dass die Sensoreinrichtung zuverlässig und bestimmungsgemäß funktioniert bzw. arbeiten kann.

Bevorzugt wird die Abschirmeinrichtung wenigstens abschnittsweise von wenigstens einem ferri- und/oder ferromagnetischen Material bereitgestellt.

In vorteilhaften Weiterbildungen sind wenigstens zwei Kopplungseinrichtungen umfasst, wobei die wenigstens zwei Kopplungseinrichtungen wenigstens abschnittsweise vertikal beabstandet zueinander angeordnet sind und wobei das Spulenelement zwischen den wenigstens zwei wenigstens abschnittsweise vertikal beabstandeten Kopplungseinrichtungen angeordnet ist. Hierdurch ist das Spulenelement besonders zuverlässig mit den Kopplungseinrichtungen gekoppelt und kann besonders effizient Energie aufnehmen.

Dabei ist unter vertikal beabstandet insbesondere beabstandet entlang der Vertikalen und/oder benachbart entlang der Vertikalen zu verstehen.

Vorzugsweise sind die zwei Kopplungseinrichtungen in einer unterschiedlichen Höhe entlang der Wandung angeordnet.

Besonders bevorzugt umfasst die Energieaufnahmeeinrichtung wenigstens zwei Spulenelemente, welche insbesondere an unterschiedlichen Positionen um die und/oder an der Kopplungseinrichtung angeordnet sind.

Insbesondere umfasst die Energieaufnahmeeinrichtung wenigstens drei, vorzugsweise vier oder je nach Ausgestaltung bevorzugt mehr als vier Spulenelemente.

Vorzugsweise umgreifen wenigstens zwei Spulenelemente die wenigstens eine Kopplungseinrichtung wenigstens abschnittsweise. Je nach Aufgabe und Ausgestaltung kann auch, insbesondere ein 8-förmig ausgestaltetes Spulenelement und/oder ein 8-förmig gewickeltes Spulenelement die wenigstens eine Kopplungseinrichtung wenigstens abschnittsweise umgreifen.

Das erfindungsgemäße Kochsystem umfasst wenigstens ein Kochgeschirr, wie es zuvor beschrieben wurde, und wenigstens eine Kochfeldeinrichtung mit wenigstens einer Aufstelleinrichtung zum Aufstellen von Kochgeschirr und mit wenigstens einer Induktionsspule zum Heizen von aufgestelltem Kochgeschirr.

Insbesondere ist die Kochfeldeinrichtung als Induktionskochfeld ausgeführt.

Vorzugsweise stellt die wenigstens eine Induktionsspule wenigstens ein elektromagnetisches Feld, insbesondere wenigstens ein elektromagnetisches Wechselfeld bereit. Dabei stellt das elektromagnetische Feld vorzugsweise wenigstens eine Energie bereit, welche wenigstens teilweise von dem wenigstens einen Spulenelement aufnehmbar ist.

Besonders bevorzugt versorgt das wenigstens eine von der Induktionsspule bereitgestellte elektromagnetische Feld wenigstens die Verbrauchseinrichtung und/oder die Speichereinrichtung des Kochgeschirrs mit Energie.

Auch das erfindungsgemäße Kochsystem weist die Vorteile des erfindungsgemäßen Kochgeschirrs auf.

Bei dem erfindungsgemäßen Verfahren zum Betreiben eines Kochsystems, wie es zuvor beschrieben ist, nimmt das Spulenelement wenigstens teilweise eine Energie des elektromagnetischen Feldes der Induktionsspule auf.

Auch das erfindungsgemäße Verfahren zum Betreiben eines Kochsystems weist die Vorteile des erfindungsgemäßen Kochsystems und des erfindungsgemäßen Kochgeschirrs auf.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine rein schematische Darstellung eines Ausführungsbeispiels eines erfindungsgemäßen Kochsystems in einer perspektivischen Ansicht;
- Figur 2: eine rein schematische Darstellung eines Ausführungsbeispiels eines erfindungsgemäßen Kochgeschirrs in einer teilweise geschnittenen Ansicht von der Seite;
- Figur 3: eine rein schematische Darstellung eines weiteren Ausführungsbeispiels eines erfindungsgemäßen Kochgeschirrs in einer teilweise geschnittenen Ansicht von der Seite;
- Figur 4: eine rein schematische Darstellung eines anderen Ausführungsbeispiels eines erfindungsgemäßen Kochgeschirrs in einer teilweise geschnittenen Ansicht von der Seite;
- Figur 5: eine rein schematische Darstellung eines weiteren Ausführungsbeispiels eines erfindungsgemäßen Kochgeschirrs in einer teilweise geschnittenen Ansicht von der Seite;
- Figur 6: eine rein schematische Darstellung eines anderen Ausführungsbeispiels eines erfindungsgemäßen Kochgeschirrs in einer teilweise geschnittenen Ansicht von der Seite; und
- Figur 7: eine rein schematische Darstellung eines weiteren Ausführungsbeispiels eines erfindungsgemäßen Kochgeschirrs in einer teilweise geschnittenen Ansicht von der Seite.

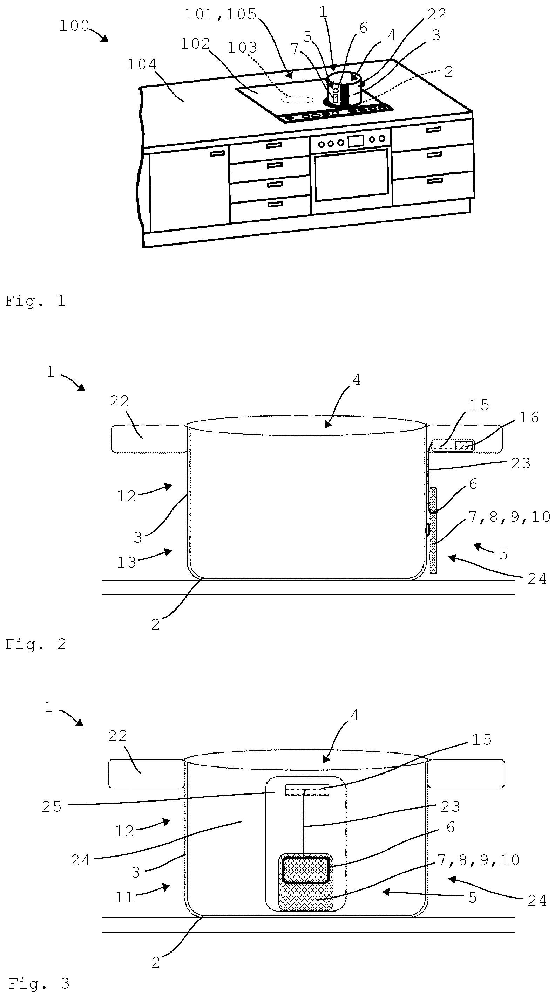

In Figur 1 ist rein schematisch ein Ausführungsbeispiel eines erfindungsgemäßen Kochsystems 100 mit einem erfindungsgemäßen Kochgeschirr 1 in einer perspektivischen Ansicht dargestellt.

In dem hier dargestellten Ausführungsbeispiel umfasst das Kochsystem 100 ein erfindungsgemäßes Kochgeschirr 1 und eine hier als Induktionskochfeld 105 ausgeführte Kochfeldeinrichtung 101.

Die Kochfeldeinrichtung 101, welche hier abschnittsweise in eine Arbeitsplatte 104 einer Küchenzeile integriert ist, weist hier eine Aufstelleinrichtung 102 zum Aufstellen von Kochgeschirr 1 und Induktionsspulen 103 zum Heizen von aufgestelltem Kochgeschirr 1 und eine hier nicht näher dargestellte Steuereinrichtung auf. Die Induktionsspulen 103, welche hier unterhalb der Aufstelleinrichtung 102 angeordnet sind, stellen hier in einem Betriebszustand der Kochfeldeinrichtung 101 ein elektromagnetisches Wechselfeld bereit.

Das Kochgeschirr 1, welches hier auf der Aufstelleinrichtung 102 angeordnet ist, umfasst hier einen Boden 2, eine Wandung 3 und ein hier als Henkel ausgeführtes Griffelement 22 zum Greifen und/oder Handhaben des Kochgeschirrs 1 durch einen Benutzer. Dabei begrenzen hier der Boden 2 und die Wandung 3 ein Aufnahmevolumen 4 zur Aufnahme eines Garguts und/oder Lebensmittels.

Der Boden 2 des Kochgeschirrs 1 ist hier dazu geeignet und ausgebildet, mittels des von der Induktionsspule 103 bereitgestellten elektromagnetischen Feldes beheizt zu werden, sodass hier ein im Aufnahmevolumen 4 aufgenommenes Gargut und/oder Lebensmittel erwärmt und/oder gegart werden kann.

Der Wandung 2 ist hier eine Energieaufnahmeeinrichtung 5 mit einem Spulenelement 6 und mit einer Kopplungseinrichtung 7 zugeordnet, wobei die Kopplungseinrichtung 7 hier das Spulenelement 6 so mit dem von der Induktionsspule 103 bereitgestellten elektromagnetischen Feld koppelt, dass das Spulenelement 6 eine vom elektromagnetischen Feld bereitgestellte Energie teilweise aufnehmen kann.

Somit ist das hier rein schematisch dargestellte erfindungsgemäße Kochsystem 100 dazu geeignet und ausgeführt, das erfindungsgemäße Verfahren zum Betreiben eines Kochsystems auszuführen.

In Figur 2 ist rein schematischen ein Ausführungsbeispiel eines erfindungsgemäßen Kochgeschirrs 1 in einer teilweise geschnittenen Ansicht von der Seite dargestellt.

Wie das in dem Ausführungsbeispiel der Figur 1 dargestellte Kochgeschirr 1 weist auch das hier rein schematisch dargestellte Kochgeschirr 1 einen Boden 2 und eine Wandung 3 auf, welche hier ein Aufnahmevolumen 4 zur Aufnahme eines Garguts und/oder Lebensmittels begrenzen. Auch hier ist der Boden 2 des Kochgeschirrs 1 dazu geeignet und ausgebildet, mittels wenigstens eines von einer Induktionsspule 103 bereitgestellten elektromagnetischen Feldes beheizt zu werden, sodass hier ein im Aufnahmevolumen 4 aufgenommenes Gargut und/oder Lebensmittel erwärmt und/oder gegart werden kann.

In dem hier dargestellten Ausführungsbeispiel weist das Kochgeschirr 1 eine Energieaufnahmeeinrichtung 5 auf, welche hier ein Spulenelement 6, eine Kopplungseinrichtung 7, eine Verbrauchseinrichtung 16 und eine Speichereinrichtung 17 umfasst.

Die Verbrauchseinrichtung 16 und die Speichereinrichtung 17 sind hier für einen Benutzer nicht sichtbar in ein Griffelement 22 integriert, wohingegen das Spulenelement 6 und die Kopplungseinrichtung 7 hier für einen Benutzer sichtbar an einer Außenseite 24 der Wandung 3 angeordnet sind. Somit ist hier die Energieaufnahmeeinrichtung 5 teilweise an der Außenseite 24 der Wandung 3 aufgenommen. Je nach Aufgabe und Ausführung kann das Verbrauchseinrichtung 16 und/oder die Speichereinrichtung 17 auch im Wesentlichen für einen Benutzer sichtbar am Griffelement 22 und/oder sichtbar oder unsichtbar an der Wandung 3 angeordnet sein. Auch ist es möglich und bevorzugt, dass das Spulenelement 6 und/oder die Kopplungseinrichtung 7 wenigstens abschnittsweise für einen Benutzer, z. B. mittels eines Gehäuses oder einer Abdeckeinrichtung 25 bzw. Abdeckung verdeckt an der Wandung 3 angeordnet ist.

In dem hier dargestellten Ausführungsbeispiel stellt die Kopplungseinrichtung 7 eine Feldleiteinrichtung 8 bereit, welche hier aus einem ferromagnetischen Material 9 mit einer relativen magnetischen Leitfähigkeit im Bereich von 4 bis 15000 ausgeführt ist. Ein solches ferromagnetisches Material 9 kann hier z. B. von einem ferromagnetischen Stahl bereitgestellt werden. Je nach Aufgabe und Ausführung kann die Feldleiteinrichtung 8 auch von einem ferrimagnetischen Material wie z.B. einem Ferrit bereitgestellt werden.

In dem hier dargestellten Ausführungsbeispiel ist die Kopplungseinrichtung 7 abschnittsweise in einem unteren Wandungsabschnitt 11 angeordnet, wobei sich die Kopplungseinrichtung 7 hier teilweise in einen oberen Wandungsabschnitt 12 erstreckt. Somit kann hier die Kopplungseinrichtung besonders effizient ein z. B. von einer Induktionsspule 103 bereitgestelltes elektromagnetisches Feld aus einem unteren Bereich des Kochgeschirrs 1, d. h. aus einem Bereich in der unmittelbaren Umgebung der Außenseite des unteren Wandungsabschnittes 11, in einen oberen Bereich des Kochgeschirrs 1, d. h. in einen Bereich in der unmittelbaren Umgebung der Außenseite des oberen Wandungsabschnittes 12 leiten und/oder das elektromagnetische Feld in dem oberen Bereich des Kochgeschirrs 1 verstärken.

Das Spulenelement wird hier von einer Wicklung eines metallischen Drahtes bereitgestellt und ist hier um die Kopplungseinrichtung 7 im oberen Wandungsabschnitt 12 gewickelt bzw. angeordnet. Somit ist hier die Spulenachse im Wesentlichen senkrecht zu einer Flächennormalen der Wandung 3 und im Wesentlichen parallel zu einer Flächennormalen des Bodens 2 ausgerichtet. Je nach Aufgabe und Ausführung kann das Spulenelement auch von mehreren Wicklungen bereitgestellt werden und/oder eine andere Orientierung relativ zu einer Flächennormalen der Wandung 3 und/oder des Bodens 2 aufweisen.

Dadurch, dass hier das Spulenelement 6 um die Kopplungseinrichtung 7 gewickelt ist, ist das Spulenelement 6 hier so mit der Kopplungseinrichtung 7 gekoppelt, dass das Spulenelement 6 hier eine Energie eines elektromagnetischen Feldes, welche hier z. B. von einer Induktionsspule 103 einer Kochfeldeinrichtung 101 bereitgestellt wird, teilweise aufnehmen kann. Dabei wird hier das elektromagnetische Feld in einem oberen Bereich des Kochgeschirrs 1 so von der Kopplungseinrichtung 7 verstärkt, dass das Spulenelement 6, welches hier in einem oberen Wandungsabschnitt 12 angeordnet ist, mehr Leistung aufnehmen kann und/oder die Energieaufnahme des Spulenelements 6 effizienter ist, als ohne Kopplungseinrichtung 7.

Die hier rein schematisch dargestellte Anordnung der Kopplungseinrichtung 7 und des Spulenelementes 6, ermöglicht hier eine hinreichend effiziente Aufnahme der Energie eines elektromagnetischen Feldes, welches z. B. mittels einer unterhalb des Kochgeschirrs 1 angeordneten Induktionsspule 103 bereitgestellt wird, sodass hier die Verbrauchseinrichtung 15 und die Speichereinrichtung 16 über die Kabelverbindung 23 mit von dem Spulenelement 6 aufgenommener Energie versorgt und funktionsgemäß betrieben werden können.

Gleichzeitig wird hier durch die Anordnung des Spulenelementes 6 in einem oberen Wandungsabschnitt 12, welcher für gewöhnlich kälter ist als der untere Wandungsabschnitt 11, ein Aufwärmen des Spulenelementes 6 verringert oder sogar gänzlich vermieden.

In Figur 3 ist rein schematisch ein weiteres Ausführungsbeispiel eines erfindungsgemäßen Kochgeschirrs 1 in einer teilweise geschnittenen Ansicht von der Seite dargestellt.

Wie in Figur 2 weist das hier rein schematisch dargestellte Kochgeschirr 1 einen Boden 2 und eine Wandung 3 auf, wobei der Boden 2 hier mittels wenigstens eines von einer Induktionsspule 103 bereitgestellten elektromagnetischen Feldes beheizbar ist. Auch ist hier der Wandung 3 eine Energieaufnahmeeinrichtung 5 zugeordnet, welche hier ein Spulenelement 6, eine Kopplungseinrichtung 7 und eine Verbrauchseinrichtung 16 umfasst.

Im Unterschied zu Figur 2 ist hier jedoch die Energieaufnahmeeinrichtung reversibel abnehmbar an der Außenseite 23 der Wandung 3 angeordnet, sodass hier ein Benutzer die Energieaufnahmeeinrichtung 5 zeitweise und/oder auch teilweise vom Kochgeschirr lösen und auch wieder an das Kochgeschirr ansetzen bzw. anfügen kann. Je nach Aufgabe und Ausführung kann das Kochgeschirr hierzu eine Halteeinrichtung aufweisen, welche die Energieaufnahmeeinrichtung 5 wenigstens teilweise reversibel an der Außenseite 23 der Wandung 3 hält.

Die Kopplungseinrichtung 7 ist hier grundsätzlich wie in Figur 2 ausgeführt und angeordnet. Im Unterschied zu Figur 2 ist hier jedoch das Spulenelement 6 seitlich auf der Kopplungseinrichtung 7 in einem oberen Wandungsabschnitt 12 angeordnet, sodass hier das Spulenelement 6 die Kopplungseinrichtung 7 überlappt und die Kopplungseinrichtung 7 zwischen der Außenseite 24 der Wandung 3 und dem Spulenelement 7 angeordnet ist. Dabei weist das Spulenelement 6 hier eine Spulenachse auf, welche im Wesentlichen parallel zu einer Flächennormalen der Wandung 3 und im Wesentlichen senkrecht zu einer Flächennormalen des Bodens 2 ausgerichtet. Je nach Aufgabe und Ausführung kann das Spulenelement hier von einer oder auch mehreren Wicklungen bereitgestellt, welche im Wesentlichen kreisförmig, helixförmig und/oder 8 förmig ausgeführt sein können.

Dadurch, dass hier das Spulenelement 6 seitlich auf der Kopplungseinrichtung 7 angeordnet ist, ist das Spulenelement 6 hier so mit der Kopplungseinrichtung 7 gekoppelt, dass das Spulenelement 6 eine Energie eines elektromagnetischen Feldes, welche hier z. B. von einer Induktionsspule 103 einer Kochfeldeinrichtung 101 bereitgestellt wird, teilweise aufnehmen kann. Dabei wird auch hier das elektromagnetische Feld in einem oberen Bereich des Kochgeschirrs 1 so von der Kopplungseinrichtung 7 verstärkt, dass das Spulenelement 6, welches hier in einem oberen Wandungsabschnitt 12 angeordnet ist, mehr Leistung aufnehmen kann und/oder die Energieaufnahme des Spulenelements 6 effizienter ist, als ohne Kopplungseinrichtung 7.

In dem hier dargestellten Ausführungsbeispiel versorgt das Spulenelement 6 die hier oberhalb der Kopplungseinrichtung 7 an einer Außenseite 24 der Wandung 3 angeordnete Verbrauchseinrichtung 15 mittels der Kabelverbindung 23 mit von dem Spulenelement 6 aufgenommener Energie.

Die Energieaufnahmeeinrichtung ist hier von einer Abdeckeinrichtung 25 wie z. B. einem Gehäuse für einen Benutzer nicht sichtbar abgedeckt.

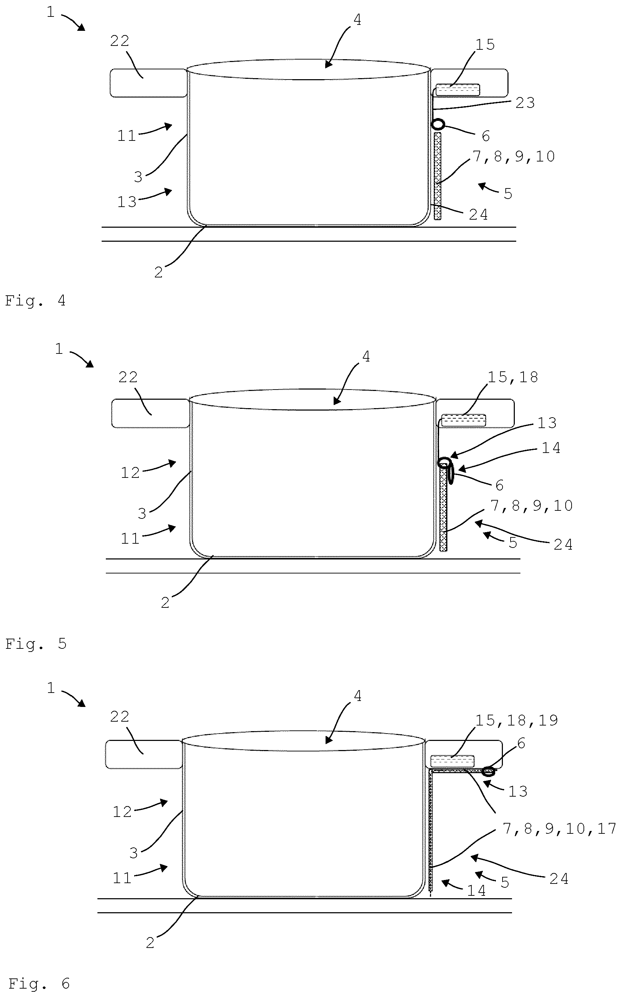

In Figur 4 ist rein schematischen ein anderes Ausführungsbeispiel eines erfindungsgemäßen Kochgeschirrs 1 in einer teilweise geschnittenen Ansicht von der Seite dargestellt.

Wie in Figur 2 weist das hier rein schematisch dargestellte Kochgeschirr 1 einen Boden 2 und eine Wandung 3 auf, wobei der Boden 2 hier mittels wenigstens eines von einer Induktionsspule 103 bereitgestellten elektromagnetischen Feldes beheizbar ist. Auch hier ist der Wandung 3 eine Energieaufnahmeeinrichtung 5 zugeordnet, welche hier ein Spulenelement 6, eine Kopplungseinrichtung 7 und eine Verbrauchseinrichtung 15 umfasst.

Die Kopplungseinrichtung 7 und die Spuleneinrichtung sind hier grundsätzlich wie in Figur 2 ausgeführt. Im Unterschied zu Figur 2 ist hier jedoch das Spulenelement 6 oberhalb bzw. über der Kopplungseinrichtung 7 angeordnet, sodass hier das Spulenelement 6 mit der Kopplungseinrichtung 7 gekoppelt ist. Somit kann auch hier das Spulenelement 6 eine Energie eines elektromagnetischen Feldes, welche hier z. B. von einer Induktionsspule 103 einer Kochfeldeinrichtung 101 bereitgestellt wird, teilweise aufnehmen und eine hier in das Griffelement abschnittsweise integrierte Verbrauchseinrichtung 15 über die Kabelverbindung 23 mit von dem Spulenelement 6 aufgenommenen Energie versorgen.

In Figur 5 ist rein schematisch ein weiteres Ausführungsbeispiel eines erfindungsgemäßen Kochgeschirrs 1 in einer teilweise geschnittenen Ansicht von der Seite dargestellt.

Wie in Figur 4 weist das hier rein schematisch dargestellte Kochgeschirr 1 einen Boden 2, eine Wandung 3 und eine Energieaufnahmeeinrichtung 5 auf, welche hier ein Spulenelement 6, eine Kopplungseinrichtung 7 und eine Verbrauchseinrichtung 15 umfasst. Dabei sind hier die Kopplungseinrichtung 7 und die Verbrauchseinrichtung 15 wie in Figur 4 ausgeführt.

Im Unterschied zu Figur 4 wir hier das Spulenelement von einer im Wesentlichen 8 förmigen Wicklung eines metallischen Drahtes bereitgestellt, welches hier abschnittsweise die Kopplungseinrichtung 7 umgreift. Dabei ist hier ein Abschnitt des Spulenelementes in einer Spulenebene angeordnet, welche im Wesentlichen parallel zum Boden 2 ausgerichtet ist, und ein anderer Abschnitt des Spulenelementes ist in einer Spulenebene angeordnet, welche im Wesentlichen senkrecht zum Boden 2, d. h. hier im Wesentlichen parallel zu der Wandung 3, ausgerichtet ist.

Somit ist auch hier das Spulenelement 6 so mit der Kopplungseinrichtung 7 gekoppelt, dass das Spulenelement 6 hier eine Energie eines elektromagnetischen Feldes, welche hier z. B. von einer Induktionsspule 103 einer Kochfeldeinrichtung 101 bereitgestellt wird, teilweise aufnehmen kann. Dabei wird auch hier das elektromagnetische Feld in einem oberen Bereich des Kochgeschirrs 1 so von der Kopplungseinrichtung 7 verstärkt, dass das Spulenelement 6, welches hier in einem oberen Wandungsabschnitt 12 angeordnet ist, mehr Leistung aufnehmen kann und/oder die Energieaufnahme des Spulenelements 6 effizienter ist, als ohne Kopplungseinrichtung 7.

In Figur 6 ist rein schematischen ein anderes Ausführungsbeispiel eines erfindungsgemäßen Kochgeschirrs 1 in einer teilweise geschnittenen Ansicht von der Seite dargestellt.

Wie in Figur 2 weist das hier rein schematisch dargestellte Kochgeschirr 1 einen Boden 2, eine Wandung 3 und eine Energieaufnahmeeinrichtung 5 auf, welche hier ein Spulenelement 6, eine Kopplungseinrichtung 7 und eine hier als Sensorelement ausgeführte Verbrauchseinrichtung 15 umfasst.

In dem hier dargestellten Ausführungsbeispiel ist die Kopplungseinrichtung im Wesentlichen L-förmig ausgeführt, sodass hier die Kopplungseinrichtung 7 einen im Wesentlichen horizontal ausgerichteten Abschnitt 13 und einen im Wesentlichen vertikal ausgerichteten Abschnitt 14 umfasst. Die Kopplungseinrichtung 7 stellt hier eine Abschirmeinrichtung 17 bereit, welche hier das Sensorelement 19 im Wesentlichen vor wenigstens einem elektromagnetischen Feld, welches hier z. B. von einer Induktionsspule 103 einer Kochfeldeinrichtung 101 bereitgestellt wird, abschirmt.

Das Spulenelement 6 ist hier um den hier im Wesentlichen horizontal ausgerichteten Abschnitt 13 gewickelt, sodass hier das Spulenelement 6 mit der Kopplungseinrichtung 7 gekoppelt ist und hier eine Energie eines elektromagnetischen Feldes, welche hier z. B. von einer Induktionsspule 103 einer Kochfeldeinrichtung 101 bereitgestellt wird, teilweise aufnehmen kann.

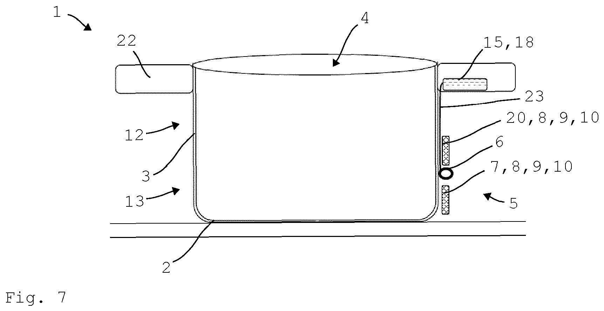

In Figur 7 ist rein schematischen ein weiteres Ausführungsbeispiel eines erfindungsgemäßen Kochgeschirrs 1 in einer teilweise geschnittenen Ansicht von der Seite dargestellt.

Wie in Figur 2 weist das hier rein schematisch dargestellte Kochgeschirr 1 einen Boden 2, eine Wandung 3 und eine Energieaufnahmeeinrichtung 5 auf, welche hier ein Spulenelement 6, eine Verbrauchseinrichtung 15 bzw. eine elektronische Baugruppe 18 und zwei an einer Außenseite 23 der Wandung 3 angeordnete Kopplungseinrichtung 7, 20 umfasst.

Dabei sind die zwei Kopplungseinrichtungen 7, 20 hier vertikal beabstandet zueinander angeordnet und das Spulenelement 6 zwischen den zwei vertikal beabstandeten Kopplungseinrichtungen 7, 20 an der Außenseite 23 der Wandung 3 angeordnet.

Auch hier ist das Spulenelement 6 mit der Kopplungseinrichtung 7 so gekoppelt, dass das Spulenelement 6 Energie eines elektromagnetischen Feldes, welche hier z. B. von einer Induktionsspule 103 einer Kochfeldeinrichtung 101 bereitgestellt wird, teilweise aufnehmen kann.

### Bezugszeichenliste

- 1: Kochgeschirr
- 2: Boden
- 3: Wandung
- 4: Aufnahmevolumen
- 5: Energieaufnahmeeinrichtung
- 6: Spulenelement
- 7: Kopplungseinrichtung
- 8: Feldleiteinrichtung
- 9: ferromagnetisches und/oder ferrimagnetisches Material
- 10: Ferrit
- 11: unterer Wandungsabschnitt
- 12: oberer Wandungsabschnitt
- 13: horizontal ausgerichteten Abschnitte
- 14: vertikal ausgerichteten Abschnitte
- 15: Verbrauchseinrichtung
- 16: Speichereinrichtung
- 17: Abschirmeinrichtung
- 18: elektronische Baugruppe
- 19: Sensorelement
- 20: Kopplungseinrichtungen
- 21: Spulenelement
- 22: Griffelement
- 23: Kabel
- 24: Außenseite
- 25: Abdeckeinrichtung
- 100: Kochsystem
- 101: Kochfeldeinrichtung
- 102: Aufstelleinrichtung
- 103: Induktionsspule
- 104: Arbeitsplatte
- 105: Induktionskochfeld

## Patentansprüche

1. Kochgeschirr (1) umfassend wenigstens einen Boden (2) und wenigstens eine Wandung (3), wobei durch den Boden (2) und die Wandung (3) wenigstens ein Aufnahmevolumen (4) begrenzt wird, wobei der Wandung (3) wenigstens eine Energieaufnahmeeinrichtung (5) mit wenigstens einem Spulenelement (6) zugeordnet ist, wobei die Energieaufnahmeeinrichtung (5) wenigstens eine Kopplungseinrichtung (7) umfasst, welche das Spulenelement (6) so mit wenigstens einem elektromagnetischen Feld koppelt, dass das Spulenelement (6) eine vom elektromagnetischen Feld bereitgestellte Energie wenigstens teilweise aufnehmen kann, **dadurch gekennzeichnet, dass** die Spulenachse des wenigstens abschnittsweise seitlich der Kopplungseinrichtung (7) angeordneten Spulenelementes (6) im Wesentlichen senkrecht zu der Flächennormalen des Bodens (2) ausgerichtet ist, und wobei die Wandung (3) einen unteren Wandungsabschnitt (11) und einen oberen Wandungsabschnitt (12) umfasst, wobei das Spulenelement (6) wenigstens abschnittsweise in dem oberen Wandungsabschnitt (12) angeordnet ist.

2. Kochgeschirr (1) nach dem Anspruch 1, **dadurch gekennzeichnet, dass** die Kopplungseinrichtung (7) wenigstens eine Feldleiteinrichtung (8) bereitstellt, welche wenigstens abschnittsweise von einem ferromagnetischen und/oder ferrimagnetischen Material (9) bereitgestellt wird.

3. Kochgeschirr (1) nach einem der beiden vorhergehenden Ansprüche, **dadurch gekennzeichnet, dass** die Kopplungseinrichtung (7) wenigstens eine Feldleiteinrichtung (8) bereitstellt, welche eine relative magnetische Leitfähigkeit von wenigstens 2 aufweist und/oder die Kopplungseinrichtung (7) wenigstens abschnittsweise von einem Ferrit (10) bereitgestellt wird.

4. Kochgeschirr (1) nach einem der vorhergehenden Ansprüche, **dadurch gekennzeichnet, dass** die Kopplungseinrichtung (5) wenigstens teilweise an der Außenseite (24) der Wandung (3) aufgenommen ist.

5. Kochgeschirr (1) nach einem der vorhergehenden Ansprüche, **dadurch gekennzeichnet, dass** das Kochgeschirr (1) zwei Wandungen (3) aufweist, welche einen Hohlraum einschließen, wobei die Kopplungseinrichtung (5) in dem Hohlraum angeordnet ist.

6. Kochgeschirr (1) nach einem der vorhergehenden Ansprüche, **dadurch gekennzeichnet, dass** die Kopplungseinrichtung (5) wenigstens abschnittsweise von wenigstens einer Abdeckeinrichtung (25) verdeckt ist und/oder die Energieaufnahmeeinrichtung (5), insbesondere die Kopplungseinrichtung (7) reversibel an der Wandung (3) angeordnet ist.

7. Kochgeschirr (1) nach einem der vorhergehenden Ansprüche, **dadurch gekennzeichnet, dass** das Spulenelement (6) wenigstens abschnittsweise um die Kopplungseinrichtung (7) gewickelt ist.

8. Kochgeschirr (1) nach einem der vorhergehenden Ansprüche, **dadurch gekennzeichnet, dass** das Spulenelement (6) wenigstens abschnittsweise über der Kopplungseinrichtung (7) angeordnet ist und/oder das Spulenelement (6) wenigstens abschnittsweise seitlich der Kopplungseinrichtung (7) angeordnet ist.

9. Kochgeschirr (1) nach einem der vorhergehenden Ansprüche, **dadurch gekennzeichnet, dass** die Kopplungseinrichtung (7) wenigstens einen im Wesentlichen horizontal ausgerichteten Abschnitt (13) und wenigstens einen im Wesentlichen vertikal ausgerichteten Abschnitt (14) umfasst.

10. Kochgeschirr (1) nach einem der vorhergehenden Ansprüche, **dadurch gekennzeichnet, dass** die Energieaufnahmeeinrichtung (5) wenigstens eine Verbrauchseinrichtung (15) und/oder Speichereinrichtung (16) umfasst.

11. Kochgeschirr (1) nach einem der vorhergehenden Ansprüche, **dadurch gekennzeichnet, dass** die Verbrauchseinrichtung (15) wenigstens abschnittsweise in dem Griffelement (22) angeordnet ist und/oder die Energieaufnahmeeinrichtung (5) wenigstens zwei Spulenelemente (6, 21) umfasst, welche insbesondere an unterschiedlichen Positionen um und/oder an der Kopplungseinrichtung (7) angeordnet sind.

12. Kochgeschirr (1) nach einem der vorhergehenden Ansprüche, **dadurch gekennzeichnet, dass** die Kopplungseinrichtung (7) wenigstens eine Abschirmeinrichtung (17) bereitstellt, welche wenigstens eine elektronische Baugruppe (18) und/oder wenigstens ein Sensorelement (19) wenigstens abschnittsweise im Wesentlichen vor wenigstens einem elektromagnetischen Feld abschirmt.

13. Kochgeschirr (1) nach einem der vorhergehenden Ansprüche, **dadurch gekennzeichnet, dass** wenigstens zwei Kopplungseinrichtungen (7, 20) umfasst sind, wobei die wenigstens zwei Kopplungseinrichtungen (7, 20) wenigstens vertikal beabstandet zueinander angeordnet sind und dass das Spulenelement (6) zwischen den wenigstens zwei vertikal beabstandeten Kopplungseinrichtungen (7) angeordnet ist.

14. Kochsystem (100) umfassend wenigstens ein Kochgeschirr (1) nach einem der vorhergehenden Ansprüche und wenigstens eine Kochfeldeinrichtung (101) mit wenigstens einer Aufstelleinrichtung (102) zum Aufstellen von Kochgeschirr (1) und mit wenigstens einer Induktionsspule (103) zum Heizen von aufgestelltem Kochgeschirr (1).

15. Verfahren zum Betreiben eines Kochsystems (100) nach dem vorhergehenden Anspruch, **dadurch gekennzeichnet, dass** das Spulenelement (6) wenigstens teilweise eine Energie eines elektromagnetischen Feldes der Induktionsspule (103) aufnimmt.

## Claims

1. Cooking vessel (1) comprising at least one base (2) and at least one wall (3), wherein at least one receiving volume (4) is bounded by the base (2) and the wall (3), wherein at least one energy absorption device (5) having at least one coil element (6) is associated with the wall (3), the energy absorption device (5) comprising at least one coupling device (7) which couples the coil element (6) to at least one electromagnetic field in such a way that the coil element (6) can at least partly absorb energy provided by the electromagnetic field, **characterised in that** the coil axis of the coil element (6) arranged at least partially laterally relative to the coupling device (7) is orientated substantially perpendicularly to the surface normal of the base (2), and the wall (3) comprising a lower wall portion (11) and an upper wall portion (12), the coil element (6) being arranged at least partially in the upper wall portion (12).

2. Cooking vessel (1) according to claim 1, **characterised in that** the coupling device (7) provides at least one field guidance device (8) which is provided at least partially by a ferromagnetic and/or ferrimagnetic material (9).

3. Cooking vessel (1) according to either of the two preceding claims, **characterised in that** the coupling device (7) provides at least one field guidance device (8) which has a relative magnetic conductivity of at least 2 and/or the coupling device (7) is provided at least partially by a ferrite (10).

4. Cooking vessel (1) according to any of the preceding claims, **characterised in that** the coupling device (5) is mounted at least partly on the outside (24) of the wall (3).

5. Cooking vessel (1) according to any of the preceding claims, **characterised in that** the cooking vessel (1) has two walls (3) which enclose a cavity, the coupling device (5) being arranged in the cavity.

6. Cooking vessel (1) according to any of the preceding claims, **characterised in that** the coupling device (5) is at least partially covered by at least one covering device (25), and/or the energy absorption device (5), in particular the coupling device (7), is reversibly arranged on the wall (3).

7. Cooking vessel (1) according to any of the preceding claims, **characterised in that** the coil element (6) is wound at least partially around the coupling device (7).

8. Cooking vessel (1) according to any of the preceding claims, **characterised in that** the coil element (6) is arranged at least partially above the coupling device (7) and/or the coil element (6) is arranged at least partially laterally relative to the coupling device (7).

9. Cooking vessel (1) according to any of the preceding claims, **characterised in that** the coupling device (7) comprises at least one substantially horizontally orientated portion (13) and at least one substantially vertically orientated portion (14).

10. Cooking vessel (1) according to any of the preceding claims, **characterised in that** the energy absorption device (5) comprises at least one consumption device (15) and/or storage device (16).

11. Cooking vessel (1) according to any of the preceding claims, **characterised in that** the consumption device (15) is arranged at least partially in the handle element (22) and/or the energy absorption device (5) comprises at least two coil elements (6, 21) which are arranged in particular at different positions around and/or on the coupling device (7).

12. Cooking vessel (1) according to any of the preceding claims, **characterised in that** the coupling device (7) provides at least one shielding device (17) which shields at least one electronic assembly (18) and/or at least one sensor element (19), at least partially, substantially from at least one electromagnetic field.

13. Cooking vessel (1) according to any of the preceding claims, **characterised in that** at least two coupling devices (7, 20) are included, the at least two coupling devices (7, 20) being arranged so as to be at least vertically spaced apart from one another and **in that** the coil element (6) is arranged between the at least two vertically spaced apart coupling devices (7).

14. Cooking system (100) comprising at least one cooking vessel (1) according to any of the preceding claims and at least one hob device (101) having at least one mounting device (102) for mounting a cooking vessel (1) and having at least one induction coil (103) for heating a mounted cooking vessel (1).

15. Method for operating a cooking system (100) according to the preceding claim, **characterised in that** the coil element (6) at least partly absorbs energy from an electromagnetic field of the induction coil (103).

## Revendications

1. Ustensile de cuisson (1) comprenant au moins un fond (2) et au moins une paroi (3), dans lequel au moins un volume de réception (4) est délimité par le fond (2) et la paroi (3), dans lequel au moins un dispositif d'absorption d'énergie (5) comportant au moins un élément formant bobine (6) est associé à la paroi (3), dans lequel le dispositif d'absorption d'énergie (5) comprend au moins un dispositif de couplage (7) qui couple l'élément formant bobine (6) à au moins un champ électromagnétique, de sorte que l'élément formant bobine (6) peut absorber au moins partiellement une énergie fournie par le champ électromagnétique, **caractérisé en ce que** l'axe de bobine de l'élément formant bobine (6) disposé au moins dans certaines sections sur le côté du dispositif de couplage (7) est orienté sensiblement perpendiculairement à la normale à la surface du fond (2), et dans lequel la paroi (3) comprend une section de paroi inférieure (11) et une section de paroi supérieure (12), dans lequel l'élément formant bobine (6) est disposé au moins dans certaines sections dans la section de paroi supérieure (12).

2. Ustensile de cuisson (1) selon la revendication 1, **caractérisé en ce que** le dispositif de couplage (7) fournit au moins un dispositif de conduction de champ (8) qui est fourni au moins dans certaines sections par un matériau ferromagnétique et/ou ferrimagnétique (9).

3. Ustensile de cuisson (1) selon l'une des deux revendications précédentes, **caractérisé en ce que** le dispositif de couplage (7) fournit au moins un dispositif de conduction de champ (8) qui présente une conductivité magnétique relative d'au moins 2 et/ou le dispositif de couplage (7) est fourni au moins dans certaines sections par une ferrite (10).

4. Ustensile de cuisson (1) selon l'une des revendications précédentes, **caractérisé en ce que** le dispositif de couplage (5) est reçu au moins partiellement sur le côté extérieur (24) de la paroi (3).

5. Ustensile de cuisson (1) selon l'une des revendications précédentes, **caractérisé en ce que** l'ustensile de cuisson (1) présente deux parois (3) qui délimitent une cavité, dans lequel le dispositif de couplage (5) est disposé dans la cavité.

6. Ustensile de cuisson (1) selon l'une des revendications précédentes, **caractérisé en ce que** le dispositif de couplage (5) est recouvert au moins dans certaines sections par au moins un dispositif de recouvrement (25) et/ou le dispositif d'absorption d'énergie (5), en particulier le dispositif de couplage (7), est disposé de manière réversible sur la paroi (3).

7. Ustensile de cuisson (1) selon l'une des revendications précédentes, **caractérisé en ce que** l'élément formant bobine (6) est enroulé au moins dans certaines sections autour du dispositif de couplage (7).

8. Ustensile de cuisson (1) selon l'une des revendications précédentes, **caractérisé en ce que** l'élément formant bobine (6) est disposé au moins dans certaines sections au-dessus du dispositif de couplage (7) et/ou l'élément formant bobine (6) est disposé au moins dans certaines sections sur le côté du dispositif de couplage (7).

9. Ustensile de cuisson (1) selon l'une des revendications précédentes, **caractérisé en ce que** le dispositif de couplage (7) comprend au moins une section (13) orientée sensiblement horizontalement et au moins une section (14) orientée sensiblement verticalement.

10. Ustensile de cuisson (1) selon l'une des revendications précédentes, **caractérisé en ce que** le dispositif d'absorption d'énergie (5) comprend au moins un dispositif consommateur (15) et/ou un dispositif accumulateur (16).

11. Ustensile de cuisson (1) selon l'une des revendications précédentes, **caractérisé en ce que** le dispositif consommateur (15) est disposé au moins dans certaines sections dans l'élément de préhension (22) et/ou le dispositif d'absorption d'énergie (5) comprend au moins deux éléments formant bobines (6, 21) qui sont disposés en particulier à des positions différentes autour du dispositif de couplage (7) et/ou sur celui-ci.

12. Ustensile de cuisson (1) selon l'une des revendications précédentes, **caractérisé en ce que** le dispositif de couplage (7) fournit au moins un dispositif de blindage (17) qui protège sensiblement d'au moins un champ électromagnétique, au moins dans certaines sections, au moins un module électronique (18) et/ou au moins un élément formant capteur (19).

13. Ustensile de cuisson (1) selon l'une des revendications précédentes, **caractérisé en ce qu'il** comprend au moins deux dispositifs de couplage (7, 20), dans lequel les au moins deux dispositifs de couplage (7, 20) sont disposés au moins verticalement à distance l'un de l'autre, **et en ce que** l'élément formant bobine (6) est disposé entre les au moins deux dispositifs de couplage (7) espacés verticalement.

14. Système de cuisson (100) comprenant au moins un ustensile de cuisson (1) selon l'une des revendications précédentes et au moins un dispositif formant plaque de cuisson (101) comportant au moins un dispositif de mise en place (102) pour la mise en place de l'ustensile de cuisson (1) et comportant au moins une bobine d'induction (103) pour le chauffage de l'ustensile de cuisson (1) mis en place.

15. Procédé permettant de faire fonctionner un système de cuisson (100) selon la revendication précédente, **caractérisé en ce que** l'élément formant bobine (6) absorbe au moins partiellement une énergie d'un champ électromagnétique de la bobine d'induction (103).
